# EUROPEAN PATENT SPECIFICATION

(11) **EP 3 069 981 B1**
(45) Date of publication and mention of the grant of the patent: **31.03.2021**
(21) Application number: 16155786.3
(22) Date of filing: 16.02.2016
(51) Int. Cl.: B62K 19/38, B60T 7/06, B62L 3/04

(54) **MOTORCYCLE**
MOTORRAD
MOTOCYCLETTE

(30) Priority: 18.03.2015 JP 2015055021
(43) Date of publication of application: 21.09.2016
(73) Proprietor: Yamaha Hatsudoki Kabushiki Kaisha, Iwata-shi, Shizuoka 438-8501 (JP)
(72) Inventor: INOUE, Kazuhisa, Iwata-shi, Shizuoka 438-0026 (JP); FUSHIMI, Takanobu, Iwata-shi, Shizuoka 438-8501 (JP)
(74) Representative: Grünecker Patent- und Rechtsanwälte PartG mbB

(56) References cited:
- WO-A1-2009/096497
- WO-A1-2014/147900
- JP-A- 2001 278 170
- JP-A- 2009 179 257

## Description

### TECHNICAL FIELD

The present invention relates generally to motorcycles, and more particularly to a motorcycle including a braking apparatus.

### BACKGROUND ART

A motorcycle braking apparatus known in the art includes a front wheel brake and a rear wheel brake that are activated in conjunction with each other upon operation of a brake pedal by a rider of the motorcycle. For example, JP 2014-162453 A and JP 2013-154845 A disclose such braking apparatuses.

The braking apparatuses disclosed in JP 2014-162453 A and JP 2013-154845 A each include an equalizer that distributes braking force to front and rear wheels. Such an equalizer includes a metal plate with upper and lower end portions. The upper end portion of the equalizer is connected with a wire that activates the front brake. The lower end portion of the equalizer is connected with a brake rod that activates the rear brake. The equalizer changes its position in accordance with rotation of a brake pedal of the motorcycle. Upon operation of the brake pedal by a rider, the equalizer moves to cause the front wheel and rear wheel brakes to activate in conjunction with each other.
A motorcycle according to the preamble of claim 1 is disclosed in WO 2014/147900 A1.

### SUMMARY OF INVENTION

### Technical Problem

A decrease in the reaction force of the wire, which activates the front wheel, may cause the equalizer to rotate beyond a predetermined range with respect to the brake pedal. To prevent such excessive rotation of the equalizer, the braking apparatus known in the art may be arranged so that a stopper on the brake pedal is brought into contact with the equalizer, thus limiting rotation of the equalizer.

Unfortunately, when the braking apparatus known in the art limits rotation of the equalizer with the stopper, the braking force of the rear brake may increase to such an extent that ride comfort for the rider is compromised.

Accordingly, embodiments of the present invention provide a motorcycle that includes a braking apparatus including a front wheel brake and a rear wheel brake which are activated in conjunction with each other, and is less likely to compromise ride comfort for a rider.

### Solution to Problem

A motorcycle according to an embodiment of the present invention includes a frame, an engine, a front wheel, a rear wheel, and a braking apparatus. The engine is supported by the frame. The front wheel is disposed forward of the engine and rotatably supported by the frame. The rear wheel is disposed rearward of the engine and rotatably supported by the frame. The braking apparatus includes a front wheel braking device to brake the front wheel, and a rear wheel braking device to brake the rear wheel. The braking apparatus further includes a bracket, a brake pedal, an equalizer, a rear wheel brake connector, and a front wheel brake connector. The bracket is supported by the frame at a position rearward of the front wheel and forward of the rear wheel in a side view of the motorcycle. The brake pedal includes: a first pivot disposed in the bracket and extending in a width direction of the motorcycle; a supported portion rotatably supported by the first pivot; a pedal portion located forward of the supported portion and to be pressed by a rider; and an upper arm located higher than the supported portion. The equalizer includes: a second pivot disposed in the upper arm and extending in the width direction of the motorcycle; and a body rotatably supported by the second pivot. The rear wheel brake connector extends rearward from the equalizer and is connected to the rear wheel braking device. The front wheel brake connector includes: a rear extension connected to the equalizer and extending rearward from the equalizer; a bend bent forward from the rear extension; and a front extension extending forward from the bend and connected to the front wheel braking device. The brake pedal further includes a stopper configured to come into contact with the equalizer to limit rotation of the equalizer. The equalizer further includes: an upper connection disposed higher than the second pivot and connected with the rear wheel brake connector; and a lower connection disposed lower than the second pivot and connected with the front wheel brake connector.

The motorcycle according to the embodiment of the present invention is arranged so that when the rider presses the pedal portion of the brake pedal, the pedal portion moves so as to move the equalizer disposed on the upper arm of the brake pedal. This causes the front wheel brake connector and rear wheel brake connector, respectively connected to the lower and upper connections of the equalizer, to be pulled in the direction in which the equalizer moves. Consequently, the front wheel brake of the front wheel braking device and the rear wheel brake of the rear wheel braking device are activated in conjunction with each other, and thus function as a combined braking system.

The motorcycle according to the embodiment of present invention includes the first pivot supporting the supported portion, and the second pivot disposed in the upper arm located higher than the supported portion. This means that the first pivot is located lower than the second pivot. A distance between a center of the first pivot and the upper connection of the equalizer will hereinafter be referred to as a "first distance" . A distance between the center of the first pivot and the lower connection of the equalizer will hereinafter be referred to as a "second distance". A distance between the pedal portion and the center of the first pivot will hereinafter be referred to as a "third distance" . The first distance is longer than the second distance. Thus, a first lever ratio, which is the ratio of the third distance to the first distance, is smaller than a second lever ratio, which is the ratio of the third distance to the second distance. The rear wheel brake connector according to the embodiment of the present invention is connected to the upper connection of the equalizer. This makes a lever ratio smaller than when the rear wheel brake connector is connected to the lower connection of the equalizer (because the first lever ratio < the second lever ratio) . As used herein, the term "lever ratio" refers to the ratio of the third distance to a distance measured from the center of the first pivot to the connection between the equalizer and the rear wheel brake connector. Because of the smaller lever ratio, the force exerted on the rear wheel brake connector upon limitation of rotation of the equalizer by the stopper is smaller than when the rear wheel brake connector is connected to the lower connection of the equalizer. This prevents an increase in the braking force of the rear wheel brake when the reaction force of the front wheel brake connector for activating the front wheel brake decreases and the stopper limits rotation of the equalizer. Consequently, ride comfort for the rider is less likely to be compromised.

The motorcycle according to the embodiment of the present invention includes the front wheel brake connector connected to the lower connection of the equalizer. This allows the bend of the front wheel brake connector to have a larger radius of curvature than when the front wheel brake connector is connected to the upper connection of the equalizer. Consequently, this embodiment facilitates routing of the front wheel brake connector.

According to another embodiment of the present invention, a distance between a center of the first pivot and the upper connection of the equalizer is preferably longer than a distance between the center of the first pivot and the lower connection of the equalizer in the side view of the motorcycle.

This embodiment reduces the braking force exerted on the rear wheel brake connector when the rider presses the pedal portion of the brake pedal. Thus, an increase in the braking force of the rear wheel brake is prevented when the reaction force of the front wheel brake connector for activating the front wheel brake decreases and the stopper limits rotation of the equalizer. Consequently, ride comfort for the rider is less likely to be compromised.

According to still another embodiment of the present invention, the rear extension of the front wheel brake connector preferably includes a portion located lower than the rear wheel brake connector in the side view of the motorcycle.

This embodiment allows the portion of the rear extension to be located at a lower position. Thus, the bend of the front wheel brake connector is likely to have a larger radius of curvature. Consequently, this embodiment facilitates routing of the front wheel brake connector.

According to yet another embodiment of the present invention, an end of the rear extension of the front wheel brake connector is preferably connected to the equalizer at a position forward of a center of the second pivot.

The end of the rear extension of the front wheel brake connector according to this embodiment is connected to the equalizer at a position forward of the center of the second pivot. Thus, the distance between the end of the rear extension and the rear end of the front wheel brake connector is longer than when the end of the rear extension is connected to the equalizer at a position rearward of the second pivot. This facilitates increasing the radius of curvature of the bend of the front wheel brake connector. Consequently, this embodiment facilitates routing of the front wheel brake connector.

According to still yet another embodiment of the present invention, the equalizer preferably further includes a front edge located lower than the second pivot. The stopper preferably extends in the width direction of the motorcycle from a portion of the brake pedal located forward of and lower than the second pivot. The stopper is preferably configured to come into contact with the front edge of the equalizer to restrict rotation of the equalizer.

The stopper according to this embodiment is located in front of the equalizer. This arrangement makes it more difficult for the stopper to interfere with the front and rear wheel brake connectors, extending rearward from the equalizer, than when the stopper is disposed behind the equalizer. In other words, this arrangement reduces the necessity to take into account interference of the front and rear wheel brake connectors with the stopper. Consequently, routing of the front and rear wheel brake connectors is facilitated.

According to another embodiment of the present invention, the equalizer preferably further includes a contact segment located forward of the second pivot. The stopper is preferably configured to come into contact with the contact segment to restrict rotation of the equalizer.

This embodiment allows the stopper to come into contact with the contact segment so as to restrict rotation of the equalizer. Thus, the position of the equalizer is restricted during maintenance, for example.

According to still another embodiment of the present invention, the motorcycle preferably further includes: a spring connection extending in the width direction of the motorcycle from a portion of the equalizer located rearward of the second pivot; and a first spring connected to the spring connection and to a rear portion of the bracket located rearward of the spring connection. The first spring preferably urges the equalizer rearward.

The urging force of the first spring according to this embodiment allows the contact segment of the equalizer to come into contact with the stopper of the brake pedal. Consequently, the initial position of the equalizer is determined easily.

According to yet another embodiment of the present invention, the brake pedal preferably further includes a connection pin disposed lower than the bracket and extending in the width direction of the motorcycle. The motorcycle preferably further includes a second spring connected to the connection pin and the bracket. The second spring urges the brake pedal to move the pedal portion upward.

The urging force of the second spring according to this embodiment allows the brake pedal to assume its initial position.

According to still yet another embodiment of the present invention, in a plan view of the motorcycle, the front wheel brake connector and the rear wheel brake connector preferably intersect at a position outward of the equalizer in the width direction of the motorcycle.

This embodiment improves flexibility of routing of the front and rear wheel brake connectors.

### Advantageous Effects of Invention

Various embodiments of the present invention provide a motorcycle that includes a braking apparatus including a front wheel brake and a rear wheel brake which are activated in conjunction with each other, and is less likely to compromise ride comfort for a rider.

### BRIEF DESCRIPTION OF DRAWINGS

FIG. 1 is a side view of a motorcycle according to an embodiment of the present invention, including a motorcycle braking apparatus.
FIG. 2 is a plan view of main components of the motorcycle.
FIG. 3 is a perspective view of the motorcycle braking apparatus.
FIG. 4 is a plan view of the motorcycle braking apparatus.
FIG. 5 is a perspective view of an equalizer of the motorcycle braking apparatus.
FIG. 6 illustrates the position of the equalizer undergoing maintenance.
FIG. 7 illustrates the position of the equalizer with a front wheel brake connector reduced in reaction force.

### DESCRIPTION OF EMBODIMENTS

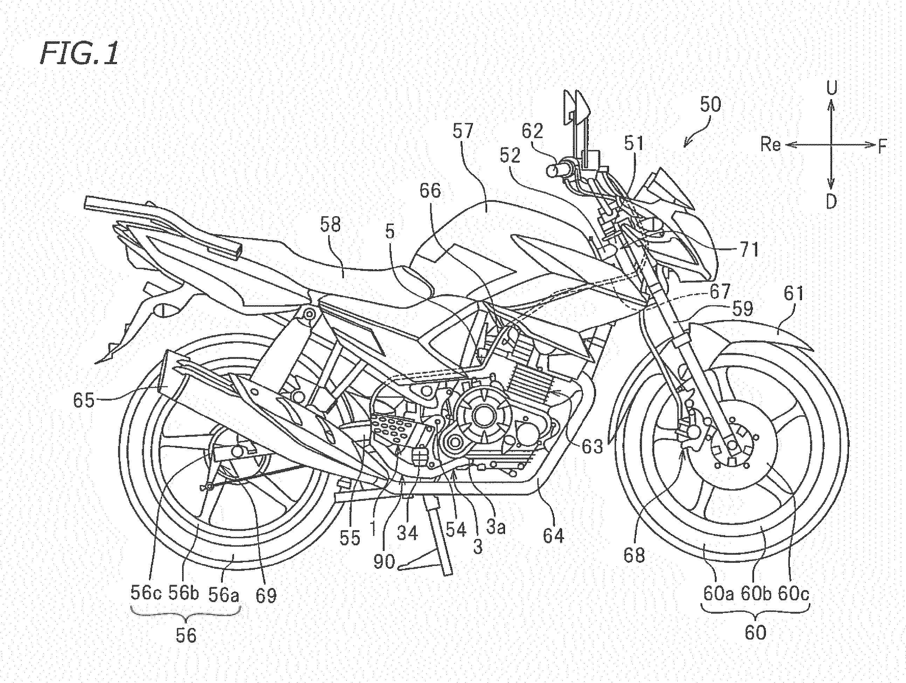

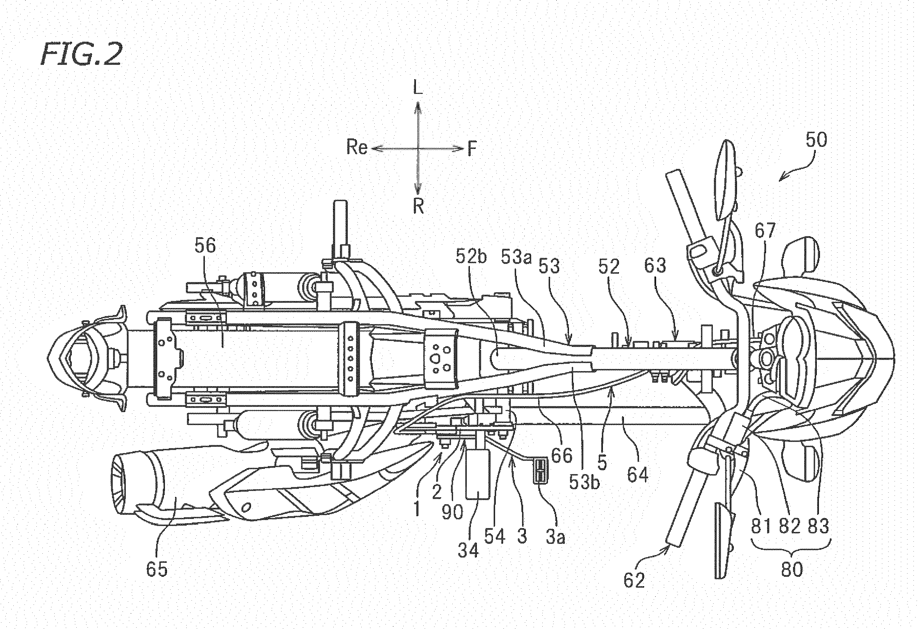

A motorcycle 50 according to an embodiment of the present invention will now be described. FIG. 1 is a right side view of the motorcycle 50. FIG. 2 is a plan view of main components of the motorcycle 50. As illustrated in FIG. 1, the motorcycle 50 includes a motorcycle braking apparatus 1. The motorcycle braking apparatus 1 is a combined braking system including a front wheel brake 68 and a rear wheel brake 69 that are activated in conjunction with each other (or simultaneously). Unless otherwise noted, the terms "front" , "rear", "right", "left", "up", and "down" respectively refer to front, rear, right, left, up, and down with respect to a rider sitting on a seat 58 of the motorcycle 50 in the following description. The terms "up" and "down" respectively refer to the vertically upward direction and the vertically downward direction when the motorcycle 50 is standing upright on a horizontal plane . Reference signs "F" , "Re" , "R" , "L" , "U" , and "D" in the drawings respectively represent front, rear, right, left, up, and down.

As illustrated in FIG. 1, the motorcycle 50 further includes a frame 71. The frame 71 includes a head pipe 51, and a main frame 52 extending rearward from the head pipe 51. As illustrated in FIG. 2, the frame 71 further includes a seat frame 53 extending rearward from a location somewhere along the main frame 52. The seat frame 53 includes a left seat frame 53a and a right seat frame 53b.

As illustrated in FIG. 1, a fuel tank 57 is disposed behind the head pipe 51, and the seat 58 is disposed behind the fuel tank 57. Note that some of the components, such as the fuel tank 57 and the seat 58, are not illustrated in FIG. 2. Disposed above the head pipe 51 is a handlebar 62. The main frame 52 supports an engine 63. An exhaust pipe 64 is secured to the front portion of the engine 63. The exhaust pipe 64 extends forward from the front portion of the engine 63, bends to extend downward, and then bends to extend rearward. The rear portion of the exhaust pipe 64 is connected with a muffler 65.

A front fork 59 is secured to the head pipe 51. The lower end portion of the front fork 59 supports a front wheel 60. The front wheel 60 is indirectly supported by the head pipe 51 via the front fork 59. In other words, the front wheel 60 is indirectly supported by the frame 71 via the front fork 59. Disposed over the front wheel 60 is a front fender 61. The front wheel 60 includes a tire 60a, a wheel 60b, and a brake disc 60c.

As illustrated in FIG. 2, the motorcycle 50 further includes a front wheel braking device 80 and a rear wheel braking device 90. The front wheel braking device 80 includes: the front wheel brake 68 including a brake caliper; a brake lever 81 supported on the handlebar 62; a master cylinder 82 supported on the handlebar 62 and connected via a brake cable (not illustrated) to the brake lever 81; and a brake hose 83 in communication with the master cylinder 82 and the front wheel brake 68. As illustrated in FIG. 1, the front wheel brake 68 is disposed adjacent to the front wheel 60. The front wheel brake 68 is supported on the front fork 59. Note that the front wheel brake 68 may be installed in any other manner. The front wheel brake 68 brakes the front wheel 60. A grip on the brake lever 81 by the rider causes a change in pressure of brake oil inside the master cylinder 82 of the front wheel braking device 80. This pressure change is transmitted to the front wheel brake 68, and the front wheel brake 68 brakes the brake disc 60c of the front wheel 60 accordingly. The front wheel brake 68 brakes the front wheel 60 also when the motorcycle braking apparatus 1 is activated. This braking operation will be described in detail below. The front wheel brake 68 according to the present embodiment is a hydraulic disc brake as already mentioned. Alternatively, the front wheel brake 68 may be any other hydraulic brake, or any brake other than a hydraulic brake. The front wheel brake 68 may be of any structure.

The main frame 52 includes a lower portion 52b (see FIG. 2) on which a pivot shaft (not illustrated) is provided. The pivot shaft supports the front end portion of a rear arm 55 (see FIG. 1) such that the rear arm 55 swings up and down. As illustrated in FIG. 1, the rear end portion of the rear arm 55 supports a rear wheel 56. The rear wheel 56 is indirectly supported by the main frame 52 via the rear arm 55. In other words, the rear wheel 56 is indirectly supported by the frame 71 via the rear arm 55. The rear wheel 56 includes a tire 56a, a wheel 56b, and a brake drum 56c.

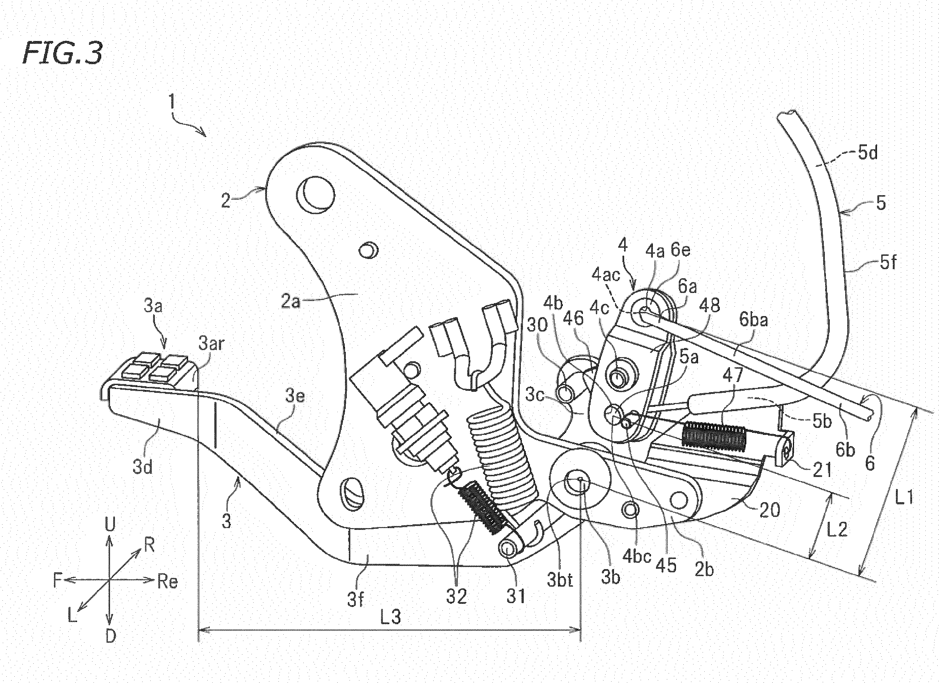

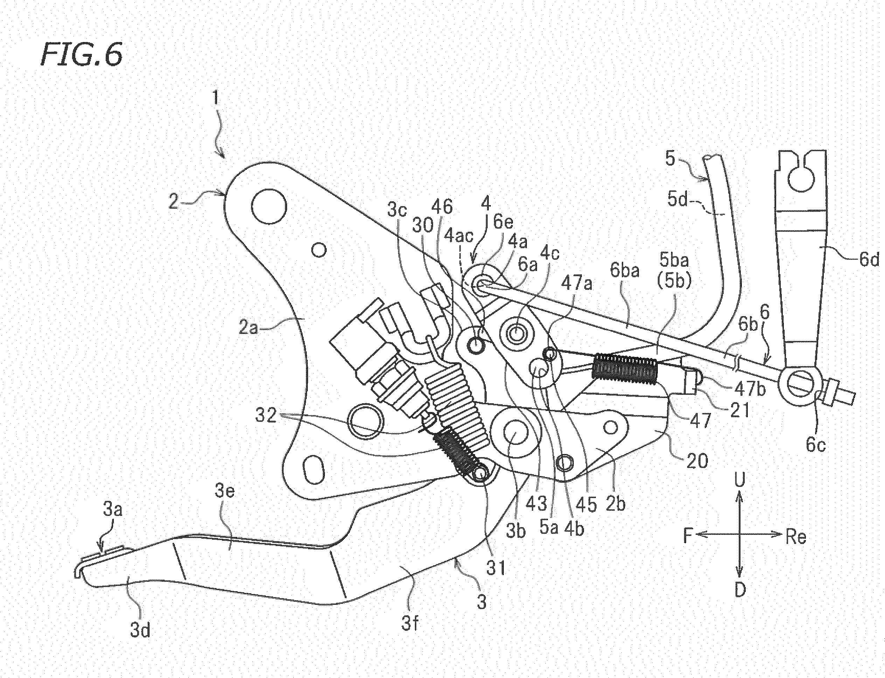

The rear wheel braking device 90 includes: a brake pedal 3 (see FIG. 3), which will be described below; an equalizer 4 (see FIG. 3) rotatably supported on the brake pedal 3; a rear wheel brake connector 6 (see FIG. 3) connected to the equalizer 4 ; an arm 6d (see FIG. 6) connected to the rear wheel brake connector 6 ; and the rear wheel brake 69 connected to the arm 6d. The rear wheel brake 69 includes a brake caliper. As illustrated in FIG. 1, the rear wheel brake 69 is disposed adjacent to the rear wheel 56. The rear wheel brake 69 is supported on the rear arm 55. The rear wheel brake 69, however, may be installed in any other manner. The rear wheel brake 69 brakes the rear wheel 56. When the rider presses the brake pedal 3, the equalizer 4 rotates the arm 6d via the rear wheel brake connector 6. With the rotation of the arm 6d, a cam (not illustrated) causes the rear wheel brake 69 to come into sliding contact with the brake drum 56c. Thus, the rear wheel braking device 90 brakes the brake drum 56c. The brake pedal 3 also serves as a component of the motorcycle braking apparatus 1, which is a combined braking system (details of this arrangement will be described below). The rear wheel brake 69 according to the present embodiment is a mechanical drum brake as just described. Alternatively, the rear wheel brake 69 may be any other mechanical brake, or any brake other than a mechanical brake. The rear wheel brake 69 may be of any structure.

Next, the motorcycle braking apparatus 1 (hereinafter simply referred to as a "braking apparatus 1") will be described. As illustrated in FIG. 3, the braking apparatus 1 includes a bracket 2, the brake pedal 3, the equalizer 4, a front wheel brake connector 5, and the rear wheel brake connector 6.

As illustrated in FIG. 2, the lower portion 52b of the main frame 52 is provided with a connector 54 extending in the width direction of the motorcycle. The bracket 2 is joined to the connector 54. In other words, the bracket 2 is joined to the frame 71. As is clear from FIGS. 1 and 2, the bracket 2 is disposed rearward of the front wheel 60 and forward of the rear wheel 56 in a side view of the motorcycle. Although the bracket 2 may have any shape, the bracket 2 according to the present embodiment is plate-shaped as illustrated in FIG. 3. The bracket 2 is disposed upright. The bracket 2 includes a body 2a, and a rear portion 2b extending rearward from the body 2a.

The brake pedal 3 extends in the front-rear direction of the motorcycle. The brake pedal 3 includes a pedal portion 3a to be pressed by the rider. The brake pedal 3 further includes: a first portion 3d located laterally of the pedal portion 3a; a second portion 3e located behind the first portion 3d; a supported portion 3f located behind the second portion 3e; a first pivot 3b located behind the supported portion 3f; and an upper arm 3c located above the first pivot 3b. The pedal portion 3a protrudes rightward from the first portion 3d. The upper arm 3c is located higher than the supported portion 3f. The first pivot 3b is disposed in the rear portion 2b of the bracket 2. The first pivot 3b is disposed in the supported portion 3f to extend in the width direction of the motorcycle. The supported portion 3f is rotatably supported by the first pivot 3b. The pedal portion 3a, which is the point where force is to be applied, is located forward of the first pivot 3b. The upper arm 3c, which is operated upon application of force to the pedal portion 3a by the rider, is located higher than the first pivot 3b. The upper arm 3c is provided with a stopper 30 configured to come into contact with the equalizer 4 to restrict rotation of the equalizer 4. The first portion 3d, the second portion 3e, the supported portion 3f, and the upper arm 3c may each have any shape.

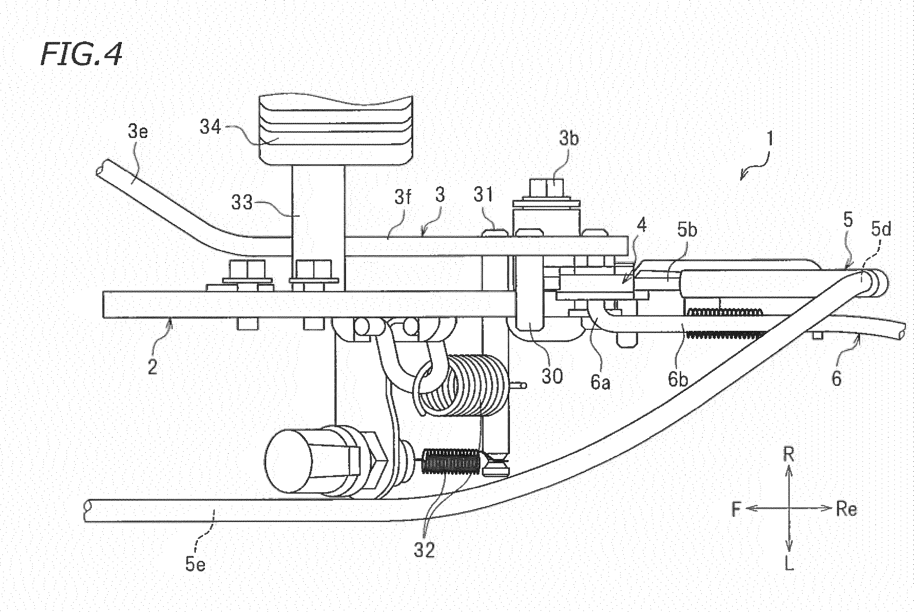

The pedal portion 3a, the first portion 3d, the second portion 3e, the supported portion 3f, and the upper arm 3c of the brake pedal 3 are rotatable around the first pivot 3b. As illustrated in FIG. 4, the bracket 2 is provided with a connector 33 extending rightward. A footrest 34 on which the rider places his or her foot is fixed to the connector 33. The rider operates the brake pedal 3, with his or her heel on the footrest 34 and toe on the pedal portion 3a. When the rider presses the pedal portion 3a downward, the pedal portion 3a, the first portion 3d, the second portion 3e, the supported portion 3f, and the upper arm 3c of the brake pedal 3 rotate counterclockwise around the first pivot 3b in FIG. 3. This moves the upper arm 3c forward. Note that the connector 33 and the footrest 34 are not illustrated in FIG. 3.

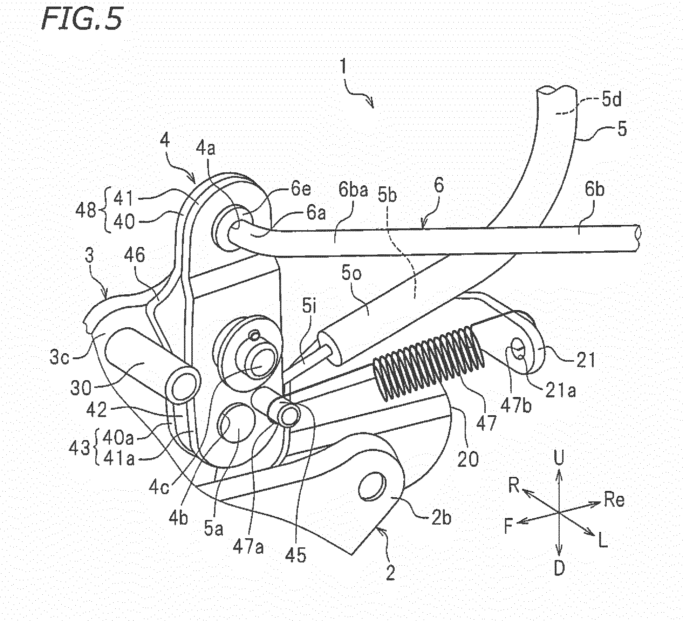

The equalizer 4 may have any shape. As illustrated in FIG. 5, the equalizer 4 according to the present embodiment includes a first plate 40 and a second plate 41 each having an oval shape. The equalizer 4 further includes an upper connection 4a, a lower connection 4b, a second pivot 4c, and a body 48. As illustrated in FIG. 3, the upper connection 4a is located higher than the second pivot 4c. The lower connection 4b is located lower than the second pivot 4c. The second pivot 4c is disposed higher than the first pivot 3b. The second pivot 4c is disposed in the body 48 and extends in the width direction of the motorcycle. The second pivot 4c is disposed in the upper arm 3c of the brake pedal 3. Thus, the second pivot 4c allows the equalizer 4 to be rotatably supported by the upper arm 3c of the brake pedal 3. When the rider presses the pedal portion 3a, the upper arm 3c moves forward as mentioned above, thus causing the equalizer 4 to move forward.

As illustrated in FIG. 5, the second plate 41 of the equalizer 4 is disposed outward of the first plate 40 in the width direction of the motorcycle. More specifically, the second plate 41 is disposed at the left of the first plate 40. The upper portions of the first and second plates 40 and 41 are joined to each other so as to be in surface contact with each other. The upper connection 4a is defined by the periphery of a hole in the upper portion of the first plate 40, and the periphery of a hole in the upper portion of the second plate 41. The lower portions of the first and second plates 40 and 41 are spaced apart from each other such that a space 42 is defined therebetween. The lower connection 4b is defined by the periphery of a hole in the lower portion of the first plate 40, and the periphery of a hole in the lower portion of the second plate 41.

The front wheel brake connector 5 may include a flexible member, such as a wire. Although the front wheel brake connector 5 may be of any structure, the front wheel brake connector 5 according to the present embodiment includes: an outer tube 5o; a wire 5i inserted into the outer tube 5o; and a pin 5a provided at the distal end of the wire 5i.

The pin 5a is connected to the lower connection 4b of the equalizer 4. More specifically, the pin 5a is in engagement with the holes in the lower portions of the first and second plates 40 and 41 of the equalizer 4. The pin 5a will hereinafter be referred to as a "first connection 5a". The front wheel brake connector 5 and the lower connection 4b of the equalizer 4 may be connected in any other manner.

The front wheel brake connector 5 includes, in addition to the first connection 5a, a rear extension 5b, a bend 5d, and a front extension 5e (see FIG. 4). The rear extension 5b extends rearward from the first connection 5a. As illustrated in FIG. 6, the rear extension 5b includes a portion 5ba located lower than the rear wheel brake connector 6 in the side view of the motorcycle. The bend 5d is bent forward from the rear extension 5b. More specifically, the bend 5d bends upward from the rear extension 5b and then bends forward. As illustrated in FIG. 4, the front extension 5e extends forward from the bend 5d and connects with the front wheel braking device 80 (see FIG. 2). When the front wheel brake connector 5 is pulled forward by movement of the equalizer 4, the front wheel brake connector 5 activates the front wheel brake 68 via the master cylinder 82 and the brake hose 83.

As illustrated in FIG. 1, the front extension 5e of the front wheel brake connector 5 includes a first brake connector 66 and a second brake connector 67. The first brake connector 66 passes through a space above the braking apparatus 1. In a plan view of the motorcycle 50 (see FIG. 2), the first brake connector 66 passes through a space between the seat frame 53 and the exhaust pipe 64 and a space between the main frame 52 and the exhaust pipe 64. The second brake connector 67 passes through a space below the main frame 52 and connects with the front wheel brake 68.

The rear wheel brake connector 6 may be of any structure. For example, the rear wheel brake connector 6 may be an inflexible rod. As illustrated in FIG. 3, the rear wheel brake connector 6 according to the present embodiment is a rod. The rear wheel brake connector 6 includes a second connection 6a and a rear extension 6b.

The second connection 6a is connected to the upper connection 4a of the equalizer 4. The second connection 6a according to the present embodiment is a distal end of the rod bending rightward. As illustrated in FIG. 5, the second connection 6a is in engagement with the holes in the upper portions of the first and second plates 40 and 41 of the equalizer 4. The second connection 6a is connected to the upper connection 4a via a washer 6e. The washer 6e is not essential and may be omitted.

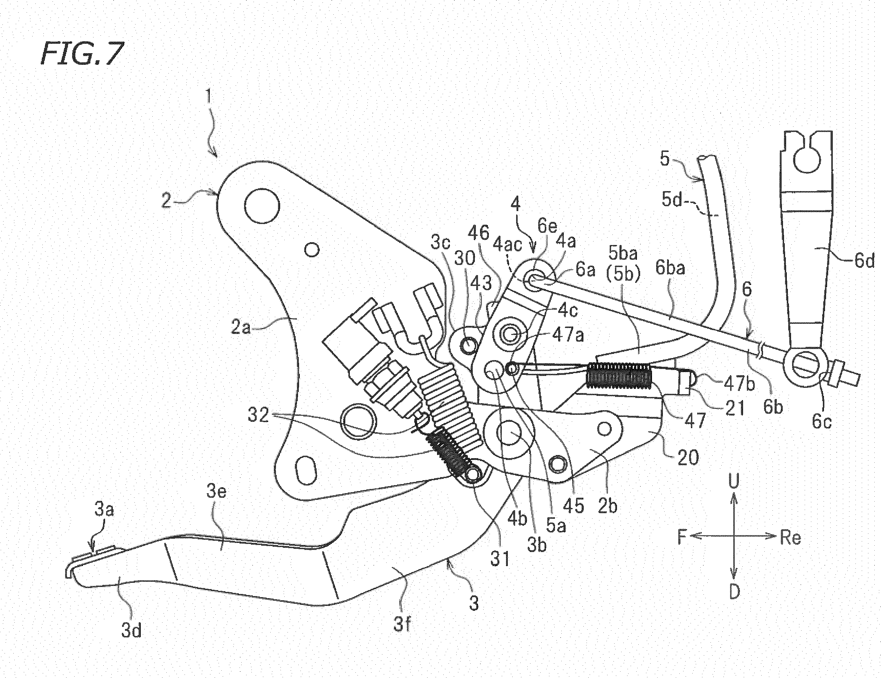

The rear extension 6b extends rearward from the second connection 6a. The rear extension 6b is joined to the rear wheel brake 69 (see FIG. 1). As illustrated in FIG. 3, the rear extension 6b includes a portion 6ba located higher than at least a portion of the rear extension 5b of the front wheel brake connector 5, and forward of a rear end 5f of the front wheel brake connector 5. As illustrated in FIG. 7, a rear end 6c of the rear extension 6b is connected to the arm 6d. When the rear wheel brake connector 6 is pulled forward by movement of the equalizer 4, the rear wheel brake connector 6 activates the rear wheel brake 69.

A bracket connector 20 is secured to the rear portion 2b of the bracket 2. As illustrated in FIG. 5, the bracket connector 20 is provided with a plate-shaped spring connection 21 protruding leftward. The spring connection 21 is provided with a hole 21a passing through the spring connection 21 in the front-rear direction of the motorcycle. A first spring 47 is connected to the spring connection 21 and a spring connection 45 (which will be described below). The first spring 47 includes a front end portion 47a wound around the spring connection 45. The first spring 47 further includes a rear end portion 47b caught in the hole 21a of the spring connection 21. The first spring 47 urges the equalizer 4 rearward.

As illustrated in FIG. 3, the brake pedal 3 includes a shaft-shaped connection pin 31. The connection pin 31 extends leftward. The connection pin 31 is disposed in a portion of the brake pedal 3 located lower than the bracket 2. The bracket 2 and the connection pin 31 are connected with a plurality of second springs 32. The second springs 32 urge the brake pedal 3 to move the pedal portion 3a upward.

The braking apparatus 1 is arranged so that when the rider presses the pedal portion 3a (see FIG. 3) of the brake pedal 3 downward against the urging force of the second springs 32, the brake pedal 3 rotates around the first pivot 3b, and the upper arm 3c moves forward. This movement moves the upper and lower connections 4a and 4b of the equalizer 4 forward against the urging force of the first spring 47. Thus, the rear wheel brake connector 6, connected to the upper connection 4a of the equalizer 4, is pulled forward, and the front wheel brake connector 5, connected to the lower connection 4b of the equalizer 4, is also pulled forward. Consequently, the front wheel brake 68 and the rear wheel brake 69 are activated in conjunction with each other, and thus function as a combined braking system. Naturally, apart from the operation of the combined braking system, a grip on the brake lever 81 by the rider causes the front wheel brake 68 to apply braking force.

As illustrated in FIG. 3, the reference sign "L1" denotes a distance between a center 3bt of the first pivot 3b of the brake pedal 3 and the upper connection 4a of the equalizer 4 (or more specifically, a center 4ac of the holes in the upper portions of the first and second plates 40 and 41 which define the upper connection 4a). The reference sign "L2" denotes a distance between the center 3bt of the first pivot 3b of the brake pedal 3 and the lower connection 4b of the equalizer 4 (or more specifically, a center 4bc of the holes in the lower portions of the first and second plates 40 and 41 which define the lower connection 4b) . The reference sign "L3" denotes a distance between a rear end face 3ar of the pedal portion 3a of the brake pedal 3 and the center 3bt of the first pivot 3b of the brake pedal 3.

In the present embodiment, the distance L1 is longer than the distance L2. The distance L3 is longer than each of the distance L1 and the distance L2. Thus, a first lever ratio (L3/L1), which is the ratio of the distance L3 to the distance L1, is smaller than a second lever ratio (L3/L2), which is the ratio of the distance L3 to the distance L2. The rear wheel brake connector 6 is connected to the upper connection 4a of the equalizer 4 as already mentioned. This makes a lever ratio smaller than when the rear wheel brake connector 6 is connected to the lower connection 4b of the equalizer 4 (because the first lever ratio < the second lever ratio). As used herein, the term "lever ratio" refers to a ratio defined as L3/LX, where LX represents a distance measured from the center 3bt of the first pivot 3b of the brake pedal 3 to the connection between the equalizer 4 and the rear wheel brake connector 6. Because of the smaller lever ratio, the force exerted on the rear wheel brake connector 6 upon limitation of rotation of the equalizer 4 by the stopper 30 is smaller than when the rear wheel brake connector 6 is connected to the lower connection 4b of the equalizer 4 . The distance L1 and the distance L2 each change in accordance with rotation of the equalizer 4, and the distance L3 changes in accordance with rotation of the brake pedal 3.

The braking apparatus 1 further includes a mechanism for restricting rotation of the equalizer 4. The mechanism for restricting rotation of the equalizer 4 will be described below.

As illustrated in FIG. 3, the upper arm 3c of the brake pedal 3 is provided with the stopper 30. The stopper 30 is shaft-shaped and extends leftward. The stopper 30 is disposed on a portion of the upper arm 3c located forward of and lower than the second pivot 4c.

As illustrated in FIG. 5, the equalizer 4 further includes a front edge 43. The front edge 43 includes: a potion 40a of the first plate 40 located lower than the second pivot 4c; and a portion 41a of the second plate 41 located lower than the second pivot 4c. The stopper 30 comes into contact with the front edge 43, thus restricting clockwise rotation of the equalizer 4 when viewed from the left of the motorcycle.

The front portion of the first plate 40 of the equalizer 4 is provided with a contact segment 46 protruding forward. The contact segment 46 has a substantially triangular shape. The stopper 30 comes into contact with the contact segment 46, thus restricting counterclockwise rotation of the equalizer 4 when viewed from the left of the motorcycle.

The lower portion of the second plate 41 of the equalizer 4 is provided with the spring connection 45. The spring connection 45 is shaft-shaped and extends leftward. The spring connection 45 is disposed rearward of the second pivot 4c.

How the stopper 30 functions will now be described using specific examples. As illustrated in FIG. 3, the contact segment 46 of the equalizer 4 is in contact with the stopper 30 when the equalizer 4 is set or assumes its initial position. Thus, the stopper 30 is used to determine the initial position of the equalizer 4.

As illustrated in FIG. 7, stretching of the front wheel brake connector 5, for example, may decrease the reaction force of the front wheel brake connector 5 which pulls the lower connection 4b of the equalizer 4 rearward. This decrease in the reaction force causes the rear wheel brake connector 6 to pull the upper connection 4a of the equalizer 4 rearward. If the equalizer 4 is rotated clockwise when viewed from the left of the motorcycle, the front edge 43 of the equalizer 4 will come into contact with the stopper 30 so as to prevent the equalizer 4 from rotating beyond a predetermined range. Thus, when the reaction force of the front wheel brake connector 5 decreases, for example, the stopper 30 prevents the equalizer 4 from rotating beyond the predetermined range. The equalizer 4 in contact with the stopper 30 pulls the rear wheel brake connector 6 forward, which activates the rear wheel brake 69 to brake the rear wheel 56.

As illustrated in FIG. 6, for maintenance of the equalizer 4, for example, the lower connection 4b of the equalizer 4 may be pulled rearward by the front wheel brake connector 5, with the pedal portion 3a of the brake pedal 3 pressed down. In such a case, when viewed from the left of the motorcycle, the equalizer 4 is rotated counterclockwise, so that the contact segment 46 of the equalizer 4 comes into contact with the stopper 30. The stopper 30 prevents excessive rotation of the equalizer 4 during maintenance of the equalizer 4, for example. Thus, the stopper 30 is used to restrict the position of the equalizer 4 during maintenance, for example.

As described above, the braking apparatus 1 according to the present embodiment includes: the rear wheel brake connector 6 connected to the upper connection 4a located higher than the second pivot 4c of the equalizer 4; and the front wheel brake connector 5 connected to the lower connection 4b located lower than the second pivot 4c. Thus, as previously mentioned, the lever ratio is smaller than when the rear wheel brake connector 6 is connected to the lower connection 4b of the equalizer 4. This reduces the force exerted on the rear wheel brake connector 6 when the rider presses the pedal portion 3a of the brake pedal 3. Thus, an increase in the braking force of the rear wheel brake 69 is prevented when the reaction force of the front wheel brake connector 5 decreases. Consequently, ride comfort for the rider is less likely to be compromised.

In a braking apparatus known in the art, a front wheel brake connector connected to a front wheel brake extends rearward from an equalizer, and then extends forward toward the front wheel brake. For this arrangement, the front wheel brake connector includes a bend. The bend of the front wheel brake connector of the braking apparatus known in the art has a small radius of curvature, which makes it difficult to route the front wheel brake connector. In contrast, the front wheel brake connector 5 according to the present embodiment is connected to the lower connection 4b of the equalizer 4, thus allowing the bend 5d of the front wheel brake connector 5 to have a larger radius of curvature than when the front wheel brake connector 5 is connected to the upper connection 4a of the equalizer 4. Consequently, this embodiment facilitates routing of the front wheel brake connector 5.

As illustrated in FIG. 6, the braking apparatus 1 according to the present embodiment is arranged so that the rear extension 5b of the front wheel brake connector 5 includes the portion 5ba located lower than the rear wheel brake connector 6 in the side view of the motorcycle. This arrangement allows the portion 5ba of the rear extension 5b to be located at a lower position. Thus, the bend 5d of the front wheel brake connector 5 is likely to have a larger radius of curvature. Consequently, this embodiment facilitates routing of the front wheel brake connector 5.

As illustrated in FIG. 3, the braking apparatus 1 according to the present embodiment is arranged so that an end of the rear extension 5b of the front wheel brake connector 5 is connected to the equalizer 4 at a position forward of the second pivot 4c. In other words, the end of the rear extension 5b is located forward of the center of the second pivot 4c. Thus, the distance between the end of the rear extension 5b and the rear end 5f of the front wheel brake connector 5 is longer than when the end of the rear extension 5b is connected to the equalizer 4 at a position rearward of the second pivot 4c. This facilitates increasing the radius of curvature of the bend 5d of the front wheel brake connector 5. Consequently, this embodiment facilitates routing of the front wheel brake connector 5.

As illustrated in FIG. 7, the equalizer 4 of the braking apparatus 1 according to the present embodiment includes the front edge 43 located lower than the second pivot 4c. The brake pedal 3 is provided with the stopper 30 extending in the width direction of the motorcycle from a portion of the brake pedal 3 located forward of and lower than the second pivot 4c. The stopper 30 comes into contact with the front edge 43 of the equalizer 4 so as to restrict rotation of the equalizer 4. The stopper 30 is located in front of the equalizer 4. This arrangement makes it more difficult for the stopper 30 to interfere with the front and rear wheel brake connectors 5 and 6, extending rearward from the equalizer 4, than when the stopper 30 is disposed behind the equalizer 4. In other words, this arrangement reduces the necessity to take into account interference of the front and rear wheel brake connectors 5 and 6 with the stopper 30. Consequently, routing of the front and rear wheel brake connectors 5 and 6 is facilitated.

As illustrated in FIG. 6, the equalizer 4 of the braking apparatus 1 according to the present embodiment includes the contact segment 46 located forward of the second pivot 4c. This allows the stopper 30 to come into contact with the contact segment 46 so as to restrict rotation of the equalizer 4. Thus, the position of the equalizer 4 is restricted during maintenance, for example.

The braking apparatus 1 according to the present embodiment includes the first spring 47 connected to the spring connection 45 of the equalizer 4 and the spring connection 21. The first spring 47 urges the equalizer 4 rearward. The urging force of the first spring 47 allows the contact segment 46 of the equalizer 4 to come into contact with the stopper 30. Consequently, the initial position of the equalizer 4 is determined easily.

The braking apparatus 1 according to the present embodiment includes the second springs 32 connected to the bracket 2 and the connection pin 31. The second springs 32 urge the brake pedal 3 to move the pedal portion 3a upward. The urging force of the second springs 32 allows the brake pedal 3 to assume its initial position.

As illustrated in FIG. 4, the braking apparatus 1 according to the present embodiment is arranged so that in the plan view of the motorcycle, the front wheel brake connector 5 and the rear wheel brake connector 6 intersect at a position outward of the equalizer 4 in the width direction of the motorcycle. This arrangement improves flexibility of routing of the front and rear wheel brake connectors 5 and 6.

The front wheel brake connector 5 of the motorcycle braking apparatus 1 according to the present embodiment includes the outer tube 5o and the wire 5i, which are flexible. Thus, the front wheel brake connector 5 is bendable. The bendable front wheel brake connector 5 has improved layout flexibility, and allows the bend 5d to have a large radius of curvature. This prevents an increase in friction between the outer tube 5o and the wire 5i. Consequently, the front wheel brake connector 5 has longer durability and higher reliability.

The first connection 5a of the front wheel brake connector 5 according to the present embodiment is partially disposed between the first and second plates 40 and 41 of the equalizer 4. The first connection 5a may be disposed in any other manner. For example, like the second connection 6a of the rear wheel brake connector 6, the first connection 5a of the front wheel brake connector 5 may protrude leftward or rightward from the lower connection 4b of the equalizer 4 and then bend to extend rearward. Note that the front wheel brake connector 5 and the rear wheel brake connector 6 desirably do not interfere with each other.

The equalizer 4 according to the present embodiment includes two plates, i.e. , the first and second plates 40 and 41. The equalizer 4 does not necessarily have to include two plates. For example, the equalizer 4 may include a single plate, or may include any other member, such as a block. While the present invention may be embodied in many different forms, a number of preferred embodiments are described herein with the understanding that the present disclosure is to be considered as providing examples of the principles of the present invention and that such examples are not intended to limit the present invention to preferred embodiments described herein and/or illustrated herein. Hence, the present invention is not limited to the preferred embodiments described herein. The scope of the invention is defined by the appended claims.

### REFERENCE SIGNS LIST

- 1: motorcycle braking apparatus (braking apparatus)
- 2: bracket
- 3: brake pedal
- 4: equalizer
- 5: front wheel brake connector
- 6: rear wheel brake connector
- 50: motorcycle
- 56: rear wheel
- 60: front wheel
- 63: engine
- 68: front wheel brake
- 69: rear wheel brake
- 71: frame

## Claims

1. A motorcycle (50) comprising:
a frame (71);
an engine (63) supported by the frame (71);
a front wheel (60) disposed forward of the engine (63) and rotatably supported by the frame (71);
a rear wheel (56) disposed rearward of the engine (63) and rotatably supported by the frame (71); and
a braking apparatus (1) including
a front wheel braking device (80) to brake the front wheel (60), and
a rearwheel braking device (90) to brake the rearwheel (56),
wherein the braking apparatus (1) further includes:
a bracket (2) supported by the frame (71) at a position rearward of the front wheel (60) and forward of the rear wheel (56) in a side view of the motorcycle (50);
a brake pedal (3) including
a first pivot (3b) disposed in the bracket (2) and extending in a width direction of the motorcycle (50),
a supported portion (3f) rotatably supported by the first pivot (3b),
a pedal portion (3a) located forward of the supported portion (3f) and to be pressed by a rider, and
an upper arm (3c) located higherthan the supported portion (3f);
an equalizer (4) including
a second pivot (4c) disposed in the upper arm (3c) and extending in the width direction of the motorcycle (50), and
a body (48) rotatably supported by the second pivot (4c);
a rearwheel brake connector (6) extending rearward from the equalizer (4) and connected to the rear wheel braking device (90); and
a front wheel brake connector (5),
wherein the equalizer (4) further includes an upper connection (4a) disposed higher than the second pivot (4c) and connected to the rearwheel brake connector (6),
**characterized in that**
the front wheel brake connector (5) includes
a rear extension (5b) connected to the equalizer (4) and extending rearward from the equalizer (4),
a bend (5d) bent forward from the rear extension (5b), and
a front extension (5e) extending forward from the bend (5d) and connected to the front wheel braking device (80),
the brake pedal (3) further includes a stopper (30) configured to come into contact with the equalizer (4) to limit rotation of the equalizer (4), and
the equalizer (4) further includes a lower connection (4b) disposed lower than the second pivot (4c) and connected to the front wheel brake connector (5).

2. The motorcycle (50) according to claim 1,
wherein a distance (L1) between a center (3bt) of the first pivot (3b) and the upper connection (4a) of the equalizer (4) is longer than a distance (L2) between the center (3bt) of the first pivot (3b) and the lower connection (4b) of the equalizer (4) in the side view of the motorcycle (50).

3. The motorcycle (50) according to claim 1 or 2,
wherein the rear extension (5b) of the front wheel brake connector (5) includes a portion (5ba) located lower than the rear wheel brake connector (6) in the side view of the motorcycle (50).

4. The motorcycle (50) according to any one of claims 1 to 3,
wherein an end of the rear extension (5b) of the front wheel brake connector (5) is connected to the equalizer (4) at a position forward of a center of the second pivot (4c).

5. The motorcycle (50) according to any one of claims 1 to 4,
wherein the equalizer (4) further includes a front edge (43) located lower than the second pivot (4c), and
wherein the stopper (30) extends in the width direction of the motorcycle (50) from a portion of the brake pedal (3) located forward of and lower than the second pivot (4c), the stopper (30) being configured to come into contact with the front edge (43) of the equalizer (4) to restrict rotation of the equalizer (4).

6. The motorcycle (50) according to claim 5,
wherein the equalizer (4) further includes a contact segment (46) located forward of the second pivot (4c), and
wherein the stopper (30) is configured to come into contact with the contact segment (46) to restrict rotation of the equalizer (4).

7. The motorcycle (50) according to any one of claims 1 to 6, further comprising:
a spring connection (45) extending in the width direction of the motorcycle (50) from a portion of the equalizer (4) located rearward of the second pivot (4c); and
a first spring (47) connected to the spring connection (45) and to a rear portion (21) of the bracket (2) located rearward of the spring connection (45), the first spring (47) urging the equalizer (4) rearward.

8. The motorcycle (50) according to any one of claims 1 to 7,
wherein the brake pedal (3) further includes a connection pin (31) disposed lower than the bracket (2) and extending in the width direction of the motorcycle (50), and
wherein the motorcycle (50) further comprises a second spring (32) connected to the connection pin (31) and the bracket (2), the second spring (32) urging the brake pedal (3) to move the pedal portion (3a) upward.

9. The motorcycle (50) according to any one of claims 1 to 8,
wherein in a plan view of the motorcycle (50), the front wheel brake connector (5) and the rear wheel brake connector (6) intersect at a position outward of the equalizer (4) in the width direction of the motorcycle (50).

## Patentansprüche

1. Motorrad (50), das umfasst:
einen Rahmen (71);
einen Motor (63), der von dem Rahmen (71) getragen wird;
ein Vorderrad (60), das vor dem Motor (63) angeordnet und drehbar an dem Rahmen (71) gelagert ist;
ein Hinterrad (56), das hinter dem Motor (63) angeordnet und drehbar an dem Rahmen (71) gelagert ist;
eine Bremsvorrichtung (1), die enthält:
eine Vorderrad-Bremsvorrichtung (80) zum Bremsen des Vorderrades (60), und
eine Hinterrad-Bremsvorrichtung (90) zum Bremsen des Hinterrades (56),
wobei die Bremsvorrichtung (1) des Weiteren enthält:
eine Halterung (2), die von dem Rahmen (71), in einer Seitenansicht des Motorrades (50), an einer Position hinter dem Vorderrad (60) und vor dem Hinterrad (56) getragen wird;
ein Bremspedal (3), das enthält:
einen ersten Schwenkbolzen (3b), der in der Halterung (2) angeordnet ist und sich in einer Breitenrichtung des Motorrades (50) erstreckt,
einen gelagerten Abschnitt (3f), der an dem ersten Schwenkbolzen (3b) drehbar gelagert ist,
einen Pedal-Abschnitt (3a), der sich vor dem gelagerten Abschnitt (3f) befindet und von einem Fahrer gedrückt wird, und
einen oberen Arm (3c), der höher liegt als der gelagerte Abschnitt (3f);
einen Ausgleichhebel (4), der enthält:
einen zweiten Schwenkbolzen (4c), der in dem oberen Arm (3c) angeordnet ist und sich in der Breitenrichtung des Motorrades (50) erstreckt,
einen Körper (48), der an dem zweiten Schwenkbolzen (4c) drehbar gelagert ist;
einen Hinterrad-Bremsverbinder (6), der sich von dem Ausgleichhebel (4) nach hinten erstreckt und mit der Hinterrad-Bremsvorrichtung (90) verbunden ist; sowie
einen Vorderrad-Bremsverbinder (5),
wobei der Ausgleichhebel (4) des Weiteren eine obere Verbindung (4a) einschließt, die höher angeordnet ist als der zweite Schwenkbolzen (4c) und mit dem Hinterrad-Bremsverbinder (6) verbunden ist,
**dadurch gekennzeichnet, dass**
der Vorderrad-Bremsverbinder (5) enthält:
eine hintere Verlängerung (5b), die mit dem Ausgleichhebel (4) verbunden ist und sich von dem Ausgleichhebel (4) nach hinten erstreckt,
einen Bogen (5d), der von der hinteren Verlängerung (5b) nach vorn gebogen ist, und
eine vordere Verlängerung (5e), die sich von dem Bogen (5d) nach vorn erstreckt und mit der Vorderrad-Bremsvorrichtung (80) verbunden ist,
wobei das Bremspedal (3) des Weiteren einen Anschlag (30) enthält, der so ausgeführt ist, dass er mit dem Ausgleichhebel (4) in Kontakt kommt, um Drehung des Ausgleichhebels (4) zu begrenzen, und
der Ausgleichhebel (4) des Weiteren eine untere Verbindung (4b) einschließt, die tiefer angeordnet ist als der zweite Schwenkbolzen (4c) und mit dem Vorderrad-Bremsverbinder (5) verbunden ist.

2. Motorrad (50) nach Anspruch 1,
wobei ein Abstand (L1) zwischen einer Mitte (3bt) des ersten Schwenkbolzens (3b) und der oberen Verbindung (4a) des Ausgleichhebels (4), in der Seitenansicht des Motorrades (50), größer ist als ein Abstand (L2) zwischen der Mitte (3bt) des ersten Schwenkbolzens (3b) und der unteren Verbindung (4b) des Ausgleichhebels (4).

3. Motorrad (50) nach Anspruch 1 oder 2,
wobei die hintere Verlängerung (5b) des Vorderrad-Bremsverbinders (5) einen Abschnitt (5ba) einschließt, der, in der Seitenansicht des Motorrades (50), tiefer liegt als der Hinterrad-Bremsverbinder (6).

4. Motorrad (50) nach einem der Ansprüche 1 bis 3,
wobei ein Ende der hinteren Verlängerung (5b) des Vorderrad-Bremsverbinders (5) mit dem Ausgleichhebel (4) an einer Position vor einer Mitte des zweiten Schwenkbolzens (4c) verbunden ist.

5. Motorrad (50) nach einem der Ansprüche 1 bis 4,
wobei der Ausgleichhebel (4) des Weiteren eine Vorderkante (43) einschließt, die tiefer liegt als der zweite Schwenkbolzen (4c), und
wobei sich der Anschlag (30) in der Breitenrichtung des Motorrades (50) von einem Abschnitt des Bremspedals (3) aus erstreckt, der vor dem zweiten Schwenkbolzen (4c) und tiefer als dieser liegt, wobei der Anschlag (30) so ausgeführt ist, dass er in Kontakt mit der Vorderkante (43) des Ausgleichhebels (4) kommt, um Drehung des Ausgleichhebels (4) zu begrenzen.

6. Motorrad (50) nach Anspruch 5,
wobei der Ausgleichhebel (4) des Weiteren ein Kontaktsegment (46) einschließt, das vor dem zweiten Schwenkbolzen (4c) liegt, und
der Anschlag (30) so ausgeführt ist, dass er in Kontakt mit dem Kontaktsegment (46) kommt, um Drehung des Ausgleichhebels (4) zu begrenzen.

7. Motorrad (50) nach einem der Ansprüche 1 bis 6, das des Weiteren umfasst:
eine Federverbindung (45), die sich in der Breitenrichtung des Motorrades (50) von einem Abschnitt des Ausgleichhebels (4) aus erstreckt, der hinter dem zweiten Schwenkbolzen (4c) liegt; und
eine erste Feder (47), die mit der Federverbindung (45) und mit einem hinteren Abschnitt (21) der Halterung (2) verbunden ist, der hinter der Federverbindung (45) liegt, wobei die erste Feder (47) den Ausgleichhebel (4) nach hinten drückt.

8. Motorrad (50) nach einem der Ansprüche 1 bis 7,
wobei das Bremspedal (3) des Weiteren einen Verbindungsbolzen (31) enthält, der tiefer angeordnet ist als die Halterung (2) und sich in der Breitenrichtung des Motorrades (50) erstreckt, und
das Motorrad (50) des Weiteren eine zweite Feder (32) umfasst, die mit dem Verbindungsbolzen (31) und der Halterung (2) verbunden ist, wobei die zweite Feder (32) Druck auf das Bremspedal (3) ausübt, um den Pedal-Abschnitt (3a) nach oben zu bewegen.

9. Motorrad (50) nach einem der Ansprüche 1 bis 8,
wobei sich der Vorderrad-Bremsverbinder (5) und der Hinterrad-Bremsverbinder (6), in einer Draufsicht auf das Motorrad (50), an einer Position außerhalb des Ausgleichhebels (4) in der Breitenrichtung des Motorrades (50) kreuzen.

## Revendications

1. Motocyclette (50) comprenant :
un châssis (71) ;
un moteur (63) supporté par le châssis (71) ;
une roue avant (60) disposée à l'avant du moteur (63) et supportée en rotation par le châssis (71) ;
une roue arrière (56) disposée à l'arrière du moteur (63) et supportée en rotation par le châssis (71) ; et
un appareil de freinage (1) comprenant
un dispositif de freinage de roue avant (80) pour freiner la roue avant (60), et
un dispositif de freinage de roue arrière (90) pour freiner la roue arrière (56),
dans lequel l'appareil de freinage (1) comprend en outre :
une équerre (2) supportée par le châssis (71) à une position à l'arrière de la roue avant (60) et à l'avant de la roue arrière (56) sur une vue de côté de la motocyclette (50) ;
une pédale de frein (3) comprenant
un premier pivot (3b) disposé dans l'équerre (2) et s'étendant dans une direction de largeur de la motocyclette (50),
une partie supportée (3f) supportée en rotation par le premier pivot (3b),
une partie de pédale (3a) située à l'avant de la partie supportée (3f) et devant être pressée par un pilote, et
un bras supérieur (3c) situé plus haut que la partie supportée (3f) ;
un égaliseur (4) comprenant
un second pivot (4c) disposé dans le bras supérieur (3c) et s'étendant dans la direction de largeur de la motocyclette (50), et
un corps (48) supporté en rotation par le second pivot (4c) ;
un connecteur de frein de roue arrière (6) s'étendant vers l'arrière par rapport à l'égaliseur (4) et connecté au dispositif de freinage de roue arrière (90) ; et
un connecteur de frein de roue avant (5),
dans lequel l'égaliseur (4) comprend en outre une connexion supérieure (4a) disposée plus haut que le second pivot (4c) et connectée au connecteur de frein de roue arrière (6),
**caractérisée en ce que**
le connecteur de frein de roue avant (5) comprend
une extension arrière (5b) connectée à l'égaliseur (4) et s'étendant vers l'arrière par rapport à l'égaliseur (4),
un coude (5d) incurvé vers l'avant par rapport à l'extension arrière (5b), et
une extension avant (5e) s'étendant vers l'avant par rapport au coude (5d) et connectée au dispositif de freinage de roue avant (80),
la pédale de frein (3) comprend en outre une butée (30) configurée pour venir en contact avec l'égaliseur (4) pour limiter une rotation de l'égaliseur (4), et
l'égaliseur (4) comprend en outre une connexion inférieure (4b) disposée plus bas que le second pivot (4c) et connectée au connecteur de frein de roue avant (5).

2. Motocyclette (50) selon la revendication 1,
dans laquelle une distance (L1) entre un centre (3bt) du premier pivot (3b) et la connexion supérieure (4a) de l'égaliseur (4) est plus longue qu'une distance (L2) entre le centre (3bt) du premier pivot (3b) et la connexion inférieure (4b) de l'égaliseur (4) sur la vue de côté de la motocyclette (50).

3. Motocyclette (50) selon la revendication 1 ou 2,
dans laquelle l'extension arrière (5b) du connecteur de frein de roue avant (5) comprend une partie (5ba) située plus bas que le connecteur de frein de roue arrière (6) sur la vue de côté de la motocyclette (50).

4. Motocyclette (50) selon l'une quelconque des revendications 1 à 3,
dans lequel une extrémité de l'extension arrière (5b) du connecteur de frein de roue avant (5) est connectée à l'égaliseur (4) à une position à l'avant d'un centre du second pivot (4c).

5. Motocyclette (50) selon l'une quelconque des revendications 1 à 4,
dans lequel l'égaliseur (4) comprend en outre un bord avant (43) situé plus bas que le second pivot (4c), et
dans lequel la butée (30) s'étend dans la direction de largeur de la motocyclette (50) à partir d'une partie de la pédale de frein (3) située à l'avant du second pivot (4c), et plus bas que celui-ci, la butée (30) étant configurée pour venir en contact avec le bord avant (43) de l'égaliseur (4) pour restreindre une rotation de l'égaliseur (4).

6. Motocyclette (50) selon la revendication 5,
dans lequel l'égaliseur (4) comprend en outre un segment de contact (46) situé à l'avant du second pivot (4c), et
dans lequel la butée (30) est configurée pour venir en contact avec le segment de contact (46) pour restreindre une rotation de l'égaliseur (4).

7. Motocyclette (50) selon l'une quelconque des revendications 1 à 6, comprenant en outre :
une connexion à ressort (45) s'étendant dans la direction de largeur de la motocyclette (50) à partir d'une partie de l'égaliseur (4) située à l'arrière du second pivot (4c), et
un premier ressort (47) connecté à la connexion à ressort (45) et à une partie arrière (21) de l'équerre (2) située à l'arrière de la connexion à ressort (45), le premier ressort (47) pressant l'égaliseur (4) vers l'arrière.

8. Motocyclette (50) selon l'une quelconque des revendications 1 à 7,
dans laquelle la pédale de frein (3) comprend en outre une broche de connexion (31) disposée plus bas que l'équerre (2) et s'étendant dans la direction de largeur de la motocyclette (50), et
dans laquelle la motocyclette (50) comprend en outre un second ressort (32) connecté à la broche de connexion (31) et à l'équerre (2), le second ressort (32) pressant la pédale de frein (3) pour déplacer la partie de pédale (3a) vers le haut.

9. Motocyclette (50) selon l'une quelconque des revendications 1 à 8,
dans laquelle, sur une vue en plan de la motocyclette (50), le connecteur de frein de roue avant (5) et le connecteur de frein de roue arrière (6) se croisent à une position à l'extérieur de l'égaliseur (4) dans la direction de largeur de la motocyclette (50).
